# EUROPÄISCHE PATENTSCHRIFT

(11) **EP 4 274 093 B1**
(45) Veröffentlichungstag und Bekanntmachung des Hinweises auf die Patenterteilung: **03.12.2025**
(21) Anmeldenummer: 23171314.0
(22) Anmeldetag: 03.05.2023
(51) Int. Cl.: H02S 20/24, F24S 25/10, F24S 25/632, F24S 25/65, H02S 30/00

(54) **MONTAGESYSTEM FÜR PHOTOVOLTAIKMODULE UND BESTANDTEILE EINES MONTAGESYSTEMS FÜR PHOTOVOLTAIKMODULE ZUR VERBESSERUNG DER INSTALLATION**
ASSEMBLY SYSTEM FOR PHOTOVOLTAIC MODULES AND COMPONENTS OF AN ASSEMBLY SYSTEM FOR PHOTOVOLTAIC MODULES TO IMPROVE INSTALLATION
SYSTÈME DE MONTAGE POUR MODULES PHOTOVOLTAÏQUES ET COMPOSANTS DE SYSTÈME DE MONTAGE POUR MODULES PHOTOVOLTAÏQUES AMÉLIORANT L'INSTALLATION

(30) Priorität: 05.05.2022 DE 202022102464 U
(43) Veröffentlichungstag der Anmeldung: 08.11.2023
(73) Patentinhaber: AEROCOMPACT Group Holding AG, 1010 Wien (AT)
(72) Erfinder: Muther, Mathias, 6822 Röns (AT)
(74) Vertreter: Patent- und Rechtsanwälte Behrmann Wagner PartG mbB

(56) Entgegenhaltungen:
- EP-A2- 1 783 440
- DE-B4- 102012 108 138
- DE-U1- 202006 009 884
- US-A1- 2013 111 713

## Beschreibung

Aus dem Stand der Technik sind bereits eine Vielzahl von Montagesystemen für Photovoltaikmodule bekannt. Die Systeme unterscheiden sich je nach Aufstellort oder Montageort des Systems, beispielsweise für Flachdächer oder Satteldächer. Für eine Vielzahl von Montagesystemen hat sich ein Grundkonzept etabliert, bei dem mehrere Reihen von Bodenprofilschienen verwendet werden, an denen über entsprechende Haltemittel, bevorzugt in der Form von Stützen, die Photovoltaikmodule befestigt werden. Die mehreren Reihen von Bodenprofilschienen werden dabei oftmals ergänzt durch im rechten Winkel zu diesen Reihen verlaufenden Querschienen oder Schienenquerverbinder, die die Ausrichtung und Beabstandung der Bodenprofilschienen sicherstellen, mechanisch Stabilität gewährleisten und/oder die Sicherung von Ballastelementen unterstützen.

Bei den bekannten Montagesystemen werden in einer Vielzahl der Fälle Bodenprofilschienen mit unterschiedlichen Längen verwendet, um mit einer entsprechenden Stückelung von Bodenprofilschienen mit unterschiedlichen Längen mit möglichst wenigen Bodenprofilschienen die Gesamtlänge des zu montierenden Systems bereitzustellen oder zu verwirklichen. Die Realisierung eines Montagesystems mit einem Minimum oder mit verhältnismäßig wenigen einzelnen Bodenprofilschienen in einer Reihe führt zu dem Vorteil, dass verhältnismäßig wenig Übergänge von Bodenprofilschienen entstehen. Dies wiederum hat den Vorteil, dass an verhältnismäßig wenigen Übergängen die thermische Expansion der Bodenprofilschienen im Übergangsbereich berücksichtigt, beispielsweise durch Vorsehen von Verbindungselementen mit einem Loslager berücksichtigt werden müssen.

Gleichzeitig führt dies jedoch zu dem Nachteil, dass bereits für die Bodenprofilschienen viele unterschiedliche Teile hergestellt und von dem Monteur, der das Montagesystem verwendet oder installiert, beschafft, bevorratet und auch transportiert werden müssen. Nicht zuletzt der Transport von Bodenprofilschienen mit einer Länge von über 2 Metern kann sich für verschiedene Transportmittel komplex, aufwändig und kostspielig gestalten.

Weitere Nachteile bekannter Montagesysteme sind durch die Haltemittel zur Befestigung oder Verbindung der Photovoltaikmodule an den Bodenprofilschienen und durch Querschienen realisiert. Bei den erstgenannten Haltemitteln ist zwar zur Montage unterschiedlichster Photovoltaikmodule und deren Montage sowohl in Längs- als auch in Querrichtung bereits bekannt, die Haltemittel mit einem beweglichen, insbesondere verschwenkbaren Wippenteil zu versehen, sodass unterschiedlichste Winkel oder Ausrichtungen der Module gegenüber den Bodenprofilschienen bei der Montage der Photovoltaikmodule erreicht werden können. Dies macht die bekannten Haltemittel zwar verhältnismäßig gut einsetzbar für unterschiedliche Photovoltaikmodule mit unterschiedlichen Abmessungen und bei unterschiedlicher Ausrichtung (Längsmontage oder Quermontage), führt jedoch gleichermaßen zu einem hohen Aufwand für den Monteur oder Installateur, da bei der Montage oder Befestigung der Photovoltaikmodule an den Haltemitteln die entsprechende Beweglichkeit oder Verschwenkbarkeit der Wippenteile oder Wippenelemente gehandhabt werden muss. Dabei führt insbesondere ein ungewolltes Verkippen der Wippenteile oder Wippenelemente in eine Extremposition oder Anschlagposition zu einem erhöhten Montageaufwand.

Im Bezug auf die Schienenquerverbinder bekannten Systeme hat sich gezeigt, dass die bekannten Systeme zwar grundsätzlich auch eine Anpassbarkeit an unterschiedlichen Abstände von querverlaufenden Bodenprofilschienen erlauben, dass jedoch diese Anpassbarkeit aufwändig ist und keine oder kaum eine Vormontage erlaubt oder ermöglicht.

Aus der US 2013/111713 A1 ist ein Gestell-System für Solarzellenmodule bekannt, umfassend geteilte Schienen, welche dem System als Strukturelemente Steifigkeit verleihen, sowie selbsteinstellende Endklemmen.

In der DE 10 2012 108138 B4 wird ein Trägerelement für Solarmodule beschrieben, welches einen Basisabschnitt zum Aufstellen auf einem Untergrund umfasst und winklig vom Basisabschnitt abstehende Halteabschnitte.

Die EP 1 783 440 A2 beschreibt eine Tragekonstruktion für die Montage von Solarmodulen auf Flachdächern, umfassend eine Trageprofileinheit zur Anlage an einer Dachoberfläche und eine geneigte Trageprofileinheit zur Anordnung eines Photovoltaikmoduls.

Aus der DE 20 2006 009884 U1 ist eine Vorrichtung zur Anordnung von Photovoltaikmodulen bekannt, umfassend Schienenelemente welche durch Stützelemente von einer Oberfläche beabstandet werden, wobei die Schienenelemente durch Steckverbindungen miteinander entlang einer Längsrichtung verkoppelt werden.

Ausgehend von dem vorangehend genannten Stand der Technik, stellt sich die vorliegende Erfindung die Aufgabe ein Montagesystem für Photovoltaikmodule und Bestandteile eines solchen Montagesystems, insbesondere ein Verbindungselement für Bodenprofilschienen, ein Bodenprofilschienensystem vorzuschlagen, die die Nachteile im Stand der Technik überwinden.

Im Hinblick auf das Verbindungselement für Bodenprofilschienen eines Montagesystems für Photovoltaikmodule wird diese Aufgabe mit den Merkmalen des Anspruchs 1 gelöst. Im Hinblick auf ein Bodenprofilschienensystem eines Montagesystems für Photovoltaikmodule wird diese Aufgabe mit den Merkmalen des Anspruchs 6 gelöst.. Bezogen auf ein Montagesystem für Photovoltaikmodule wird diese Aufgabe mit den Merkmalen des Anspruchs 9 gelöst.

Vorteilhafte Ausgestaltungen sind Gegenstand der Unteransprüche, der nachfolgenden Beschreibung und der Figurenbeschreibung. Alle nachfolgend vorrichtungsmäßig offenbarten Merkmale sollen auch als verfahrensmäßig offenbart gelten.

Das erfindungsgemäße Verbindungselement für Bodenprofilschienen eines Montagesystems für Photovoltaikmodule umfasst erfindungsgemäß einen als U-Profilschiene ausgebildeten Grundkörper, bevorzugt aus einem Metall, mit zwei parallelen Seitenschenkeln und einem Verbindungsabschnitt, wobei beide Seitenschenkel an einem vom Verbindungsabschnitt abgewandten freien Ende einen, bevorzugt monolithisch mit dem Grundkörper ausgebildeten, Überstand aufweisen, wobei im montierten Zustand die Seitenschenkel in Kanalabschnitten der Bodenprofilschiene so geführt werden, dass eine Wandung der Kanalabschnitte oberhalb und bevorzugt angrenzend an die freien Enden der Seitenschenkel verlaufen, wobei der Überstand so ausgebildet ist, dass dieser im montierten Zustand nicht oben über die Wandung des Kanalabschnitts übersteht.

Mit dem erfindungsgemäßen Verbindungselement wird in besonders vorteilhafter Weise realisiert, dass einerseits ein Loslager zwischen benachbarten Bodenprofilschienen ausgebildet oder realisiert werden kann und gleichzeitig der Übergang zwischen zwei benachbarten Bodenprofilschienen einschließlich des zwischen den Bodenprofilschienen zur Verbindung angeordneten Verbindungselement nicht die Anordnung oder Befestigung von sonstigen Bestandteilen des Montagesystems, insbesondere der Anordnung von Haltemitteln beeinträchtigt oder gar verhindert. Darüber hinaus wird in besonders vorteilhafter Weise erreicht, dass einerseits die Übergänge zwischen benachbarten Bodenprofilschienen nicht als Montageort oder Anordnungspunkt für Haltemittel ausfallen oder ausgenommen werden und dass zudem ohne Aufwand und technische Einschränkung auch zwischen entsprechend vielen Bodenprofilschienen loslagert zur Kompensation thermischer Ausdehnung vorgesehen werden können.

Dies führt in besonders vorteilhafter Weise wiederum dazu, dass das entsprechende Montagesystem mit einer minimalen Anzahl an unterschiedlichen Bodenprofilschienen, insbesondere unterschiedlichen Längen von Bodenprofilschienen auskommt, was zwar dazu führt, dass insgesamt mehr einzelne Bodenprofilschienen verlegt oder montiert und mit Verbindern oder Verbindungselementen versehen werden müssen, was aber gleichzeitig dazu führt, dass entsprechend kurze Bodenprofilschienen, beispielsweise mit einer Länge von maximal 2 Metern, verwendet werden können, die einerseits leichter und kostengünstiger transportierbar sind und darüber hinaus beim die Montage ausführenden Unternehmer die Anforderung an die der Beschaffung, den Transport und die Lagerhaltung deutlich verringert.

Die besonders vorteilhafte Nutzung auch des Übergangsbereichs zwischen benachbarten Bodenprofilschienen, beispielsweise zur Anordnung von Haltemitteln, wird gemäß der Erfindung dadurch erreicht, dass der Überstand, der bevorzugt auf einer Seite oder an einer Bodenprofilschiene dazu genutzt wird einen Anschlag zu realisieren oder herzustellen, nicht auf die Oberseite oder sonstige Bereiche der Bodenprofilschiene vorsteht, die zur Anordnung oder Befestigung von Haltemitteln oder sonstigen Bestandteilen des Montagesystems verwendet werden. Über den Überstand kann folglich auf einer Seite oder angrenzend an eine Bodenprofilschiene ein Anschlag hergestellt werden, der eine definierte Lage zu einer Bodenprofilschiene herstellt. Über geeignete Mittel, auf die nachfolgend noch eingegangen wird, oder auch händisch kann dann auf einer zweiten Seite des Überstands, an dem kein Anschlag mit einer Bodenprofilschiene hergestellt wurde, ein Spalt oder ein Abstand für die nächste, angrenzende Bodenprofilschiene hergestellt oder im Rahmen der Erstmontage eingestellt werden, sodass dann ein entsprechendes Loslager zur Kompensation von thermischen Ausdehnungen der Bodenprofilschienen eingerichtet wird.

Weiterhin ist besonders vorteilhaft, dass das Verbindungselement, bevorzugt einschließlich des Überstands sowie der Seitenschenkel und des Verbindungsabschnitts aus einem einteiligen oder monolithischen Bauteil bestehen kann, welches beispielsweise als Biegeteil aus einem Blech oder einem ähnlichen flachen oder plattenförmigen Grundwerkstoff hergestellt sein kann.

Eine Ausbildung aus Metall hat den besonderen Vorteil, dass nicht nur die mechanische Stabilität gewährleistet ist, sondern dass auch die elektrischen Eigenschaften, insbesondere im Hinblick auf die Blitzschlagfähigkeit, zwischen den, insbesondere auch aus Metall gefertigten, Bodenprofilschienen gegeben ist.

Gemäß einer ersten vorteilhaften Ausführungsform des Verbindungselements kann vorgesehen sein, dass das freie Ende der Seitenschenkel in einer Längsrichtung auf einer Seite, bevorzugt auf beiden Seiten, in einem vorgegebenen Abstand von dem Überstand, eine Markierung, insbesondere eine Kerbe, aufweist.

Dadurch kann zusätzlich in besonders vorteilhafte Weise die Montage, insbesondere die Verbindung zweier Bodenprofilschienen über ein entsprechendes Verbindungselement, erleichtert werden. Denn in der vorliegenden Ausgestaltung kann ermöglicht werden, dass auf einer Seite, wie vorangehend bereits beschrieben, der Überstand bis zu einem Anschlag eines Kanalabschnitts, bevorzugt einer Oberseite eines Kanalabschnitts, in eine Bodenprofilschiene in Längsrichtung eingeführt wird und die zweite Bodenprofilschiene im Rahmen der Erstinstallation oder Erstaufstellung des Montagesystems nur soweit auf das Verbindungselement aufgeschoben wird, bis ein Ende der Bodenprofilschiene die Markierung, insbesondere die Kerbe, auf der noch freien Seite des Überstands erreicht ist. Daher kann es besonders vorteilhaft sein, die Markierung, insbesondere die Kerbe, beidseitig des Überstandes anzubringen, um eine beidseitige Montage oder eine Invarianz der Montage des Verbindungselements in Längsrichtung zu gewährleisten, auch wenn bei der Benutzung nur eine Markierung als Vorgabe eines Abstands oder Spalts der benachbarten Bodenprofilschienen genutzt wird. Besonders vorteilhaft kann der Abstand zwischen dem Überstand, insbesondere dem Ende des Überstands und der Markierung in Längsrichtung, insbesondere der Kerbe, so bemessen sein, dass dieser größer ist, als die zu erwartende thermische Ausdehnung der Bodenprofilschiene, insbesondere einschließlich einer entsprechenden Toleranz.

Auch in diesem Hinblick profitiert das erfindungsgemäße Verbindungselement sowie das erfindungsgemäße Montagesystem von verhältnismäßig kurzen, Bodenprofilschienen mit einer Länge von 2 Metern oder weniger. Denn dann kann auch der Abstand zwischen dem Überstand oder dem Ende des Überstands und der Markierung mit hoher Wahrscheinlichkeit eine Allgemeingültigkeit für alle Bodenprofilschienen aufweisen und damit sicher und zuverlässig ein entsprechendes Loslager oder eine entsprechende Kompensation der thermischen Ausdehnung der Bodenprofilschienen bereitstellen.

Gemäß einer weiteren, besonders bevorzugten Ausgestaltung des Verbindungselements kann vorgesehen sein, dass der Grundkörper in Endabschnitten der Seitenschenkel in Längsrichtung eine Aufnahmeöffnung oder Aufnahmevertiefung aufweist, die zur Aufnahme eines Spangenelements dient. Die Aufnahmeöffnung oder Aufnahmevertiefung ist ein konstruktiv einfach zu realisierendes Mittel, um eine, beispielsweise als separates Bauteil, ausgeführte Spange oder ein als separates Bauteil ausgeführtes Spangenelement aufzunehmen. Auf das besagte Spangenelement wird im Rahmen der nachfolgenden Ausführungsform noch genauer eingegangen werden. Grundsätzlich dient das Spangenelement zur elektrischen Kontaktierung benachbarter Bodenprofilschienen über das Verbindungselement. Demnach ist das Spangenelement bevorzugt aus einem metallischen Werkstoff oder weist zumindest teilweise eine elektrische leitende Oberfläche auf, die einen elektrisch leitenden Kontakt zu dem Verbindungselement ermöglicht. Das Spangenelement kann aber auch zur mechanischen Sicherung oder Befestigung des Verbindungselements an oder in den besagten Bodenprofilschienen beitragen.

Gemäß einer weiteren vorteilhaften Ausführungsform kann vorgesehen sein, dass die Aufnahmeöffnung oder Aufnahmevertiefung sich vom freien Ende der Seitenschenkel in Richtung des Verbindungsabschnitts, bevorzugt als Schlitzung, erstreckt. Dies ermöglicht sowohl eine einfache Ausbildung der Aufnahmeöffnung oder Aufnahmevertiefung als auch eine einfache Aufnahme oder Montage des Spangenelements an oder in dem Verbindungselement und erleichtert somit insgesamt sowohl die Vormontage als auch die endgültige Montage des Montagesystems.

In einer weiteren, ebenfalls bevorzugten Ausgestaltung des Verbindungselements kann vorgesehen sein, dass ein in die Aufnahmeöffnung oder Aufnahmevertiefung eingesetztes Spangenelement, welches in einer Breitenrichtung mit elastisch verformbaren Seitenteilen wenigstens teilweise über die Seitenschenkel des Verbindungselements übersteht, im montierten Zustand durch eine Verformung der Seitenteile durch die Bodenprofilschiene eine Anpressung der Seitenteile an die Bodenprofilschiene, bevorzugt die Kanalabschnitte bereitstellt.

Durch das seitlich oder in Breitenrichtung wenigstens teilweise Überstehen der Spange oder des Spangenelements über die Seitenschenkel und die entsprechende Realisierung von Kanalabschnitten auf Seiten der Bodenprofilschiene, die in Breitenrichtung nur geringfügig breiter sind als die Breite der Seitenschenkel des Verbindungselements, kann durch das Verbindungselement mit darin eingesetzten Spangenelement und dessen wenigstens teilweisen Überstand der Seitenteile in Breitenrichtung erreicht werden, dass beim Eintreten oder Einführen des Verbindungselements in den Kanalabschnitt einer Bodenprofilschiene eine Anpressung der Seitenteile an die Bodenprofilschiene, bevorzugt die Kanalabschnitte erreicht wird, sodass über das Spangenelement einerseits eine elektrische Kontaktierung, beispielsweise nach Art eines Schleifkontaktes, und/oder eine mechanische Sicherung oder eine mechanische Klemmung im Kanalabschnitt oder in der Bodenprofilschiene erreicht wird.

Ein erfindungsgemäßes Bodenprofilschienensystem eines Montagesystems für Photovoltaikmodule umfassend wenigstens zwei Reihen von Bodenprofilschienen, die zur Befestigung von Haltemitteln zur Halterung von Photovoltaikmodulen dienen, wobei jede Reihe von Bodenprofilschienen wenigstens zwei Bodenprofilschienen umfasst, löst die oben genannte Aufgabe in erfindersicher Weise dadurch, dass zwischen jeweils zwei aneinander angrenzenden Bodenprofilschienen ein Verbindungselement nach einer der vorangehend beschriebenen Ausführungsform angeordnet ist. Das Bodenprofilschienensystem kann dabei besonders bevorzugt, wie oben bereits angedeutet, in jeder Reihe eine Vielzahl von verhältnismäßig kurzen Bodenprofilschienen, beispielsweise mit einer standardisierten Länge von 2 Metern, und etwaige, auf eine entsprechend kürzere Länge zugeschnittene Endstücken, aufweisen, sodass die Verbringung der Bodenprofilschienen vom Herstellungsort, über Zwischenhändler, Montagebetriebe bis hin zum Aufstellung- oder Montageort erheblich erleichtert wird und unter sehr geringen Kosten ermöglicht wird. Über die vorangehend bereits beschriebenen Verbindungselemente kann dabei sichergestellt werden, dass trotz der verhältnismäßig hohen Anzahl an Übergängen zwischen benachbarten Bodenprofilschienen pro Reihe, eine fast ungehinderte oder unbegrenzte Anordnung von Haltemitteln zur Befestigung oder Verbindung von Bodenprofilschienen einerseits und Photovoltaikmodulen andererseits ermöglicht wird. Dazu weisen die Bodenprofilschienen bevorzugt einen Montagekanal oder Montagekanalabschnitt auf, der zur Befestigung der Haltemittel dient. Der Montagekanalabschnitt kann bevorzugt mittig oder zentral auf der Bodenprofilschiene angeordnet sein. Seitlich angrenzend an den Montagekanalabschnitt können bevorzugt symmetrisch zu beiden Seiten, weitere Kanalabschnitte vorgesehen oder realisiert sein, die beispielsweise auch zur Aufnahme der Verbindungselemente dienen.

Vorteilhaft kann vorgesehen sein, dass an einem Übergang zwischen zwei Bodenprofilschienen jeweils zwei Verbindungselemente angeordnet sind, bevorzugt jeweils auf einer Seite eines mittigen Montagekanals oder Montagekanalabschnitts.

In einer vorteilhaften Ausgestaltung des Bodenprofilschienensystems kann vorgesehen sein, dass im Zustand einer Erstmontage das Verbindungselement so angeordnet ist, dass der Überstand auf einer Seite in Längsrichtung bündig an einer Bodenprofilschiene angrenzt und auf der anderen Seite des Überstands in Längsrichtung eine Bodenprofilschiene mit einem Abstand zum Überstand angeordnet ist, wobei besonders bevorzugt die besagte Bodenprofilschiene am oder im Bereich einer Markierung, insbesondere einer Kerbung, des Verbindungselements endet. Dadurch wird in besonders einfacher und effektiver Art eine einfache Montage des Bodenprofilschienensystems ermöglicht, und gleichzeitig auf einfache und effektive Art und Weise ein Loslager zwischen benachbarten Bodenprofilschienen realisiert, welche sowohl die thermische Ausdehnung der Bodenprofilschienen berücksichtigt und ermöglicht und gleichzeitig die Übergänge benachbarter Bodenprofilschienen für die Anordnung oder Befestigung von Haltemitteln nicht unbrauchbar macht.

In einer weiteren, besonders bevorzugten Ausführungsform des Bodenprofilschienensystems kann vorgesehen sein, dass eine entnehmbare Abstandslehre, die bei der Erstmontage auf einer Seite des Überstands auf oder an dem Verbindungselement positioniert ist und einen Hilfsanschlag für eine Bodenprofilschiene darstellt, vorgesehen ist, um einen vorgegebenen Abstand zwischen dem Überstand des Verbindungselements und einer benachbarten Bodenprofilschiene in einer Längsrichtung sicherzustellen. Die entnehmbare Abstandslehre kann so sicherstellen, dass auf einer Seite des Überstands ein Abstand zwischen dem Ende des Überstands und der nächsten, angrenzenden Bodenprofilschiene eingehalten wird, der dann im Anschluss an die Erstmontage die Kompensation der thermischen Ausdehnung der Bodenschienen erreicht oder sicherstellt.

Vorteilhaft können Haltemittel eines Montagesystems für Photovoltaikmodule zur Befestigung eines Photovoltaikmoduls an einer Bodenprofilschiene oder einer Reihe von Bodenprofilschienen vorgesehen sein mit einem Basiselement zur Verbindung mit einer Bodenprofilschiene und einem gegenüber dem Basiselement um eine Schwenkachse schwenkbar gelagertes Wippenelement zur Verbindung mit dem Photovoltaikmodul, bevorzugt in einem Rand- oder Eckbereich eines Photovoltaikmoduls wobei ein Vorspannelement vorgesehen ist, welches derart mit dem Basiselement und dem Wippenelement zusammenwirkt, dass bei einer Beschleunigung des Wippenelements lediglich durch die Gewichtskraft eine Rotation des Wippenelements gegenüber dem Basiselement verhindert wird und bei einer zusätzlichen Beschleunigung, insbesondere durch eine händische oder werkzeuglose Krafteinwirkung, eine, insbesondere stufenlose, Verstellung des Wippenelements gegenüber dem Basiselement ermöglicht wird.

Durch die vorteilhafte Realisierung des Vorspannelements kann also erreicht werden, dass die Vorteile eines variablen Winkels des Wippenelements gegenüber dem Basiselement, die grundsätzlich eine Montage unterschiedlich dimensionierter Photovoltaikmodule und unterschiedlicher Ausrichtungen der Photovoltaikmodule ermöglicht, auch in besonders vorteilhafter Weise eine einfache und sichere Montage oder Vormontage ermöglichen. So kann beispielsweise im Rahmen der Erstmontage ein Haltemittel oder mehrere Haltemittel auf einer oder mehreren Bodenprofilschienen angeordnet und befestigt werden und im Rahmen dessen oder im Anschluss an die Befestigung eine, beispielsweise werkzeuglose, Vorausrichtung der Wippenelemente vorgenommen werden, die dann beibehalten wird. Durch diese, bevorzugt händische oder werkzeuglose, Vorausrichtung die im Anschluss an die Vorausrichtung aufgrund des Vorspannelements beibehalten wird oder nicht verloren geht, kann im Anschluss daran eine besonders einfache und effektive Montage oder Verbindung des Wippenelements mit den Photovoltaikmodulen hergestellt werden. Dadurch wird der Montageaufwand verringert und Montagepersonal eingespart.

Gemäß einer ersten vorteilhaften Ausführungsform des Haltemittels kann vorgesehen sein, dass das Vorspannelement so ausgeführt ist, dass eine Klemmwirkung wenigstens auf das Wippenelement ausgeübt wird. Durch eine entsprechende Klemmung kann besonders gut und dementsprechend vorteilhaft die Kraft-, Drehmoment- oder Impulsgröße vorgegeben oder eingestellt werden, die zeitweise benötigt wird, um eine Verstellung des Wippenelements zu bewirken, indem die Klemmwirkung oder entsprechende Klemmkräfte überwunden werden.

In einer weiteren, besonders bevorzugten Ausgestaltung des Haltemittels kann vorgesehen sein, dass das Vorspannelement konzentrisch zur Schwenkachse angeordnet ist, um die das Wippenelement gegenüber dem Basiselement verschwenkbar ist. Die konzentrische Anordnung erleichtert einerseits die Fertigung und Montage des Haltemittels selbst und kann zudem auch eine besonders einfache Klemmwirkung oder sonstige Hemmwirkung auf das Basiselement und/oder das Wippenelement ausüben, um die benötigte Sicherung in einem im Wesentlichen kraftfreien Zustand zu gewährleisten.

Besonders bevorzugt kann vorgesehen sein, dass ein Vorspannelement beidseitig an einer Schwenkachse angeordnet ist. Durch wenigstens zwei, auf gegenüberliegenden Seiten der Schwenkachse angeordnete Vorspannelemente können die Klemm- oder Hemmkräfte auf das Basiselement und/oder das Wippenelement besonders vorteilhaft verteilt werden.

Gemäß einer weiteren vorteilhaften Ausgestaltung des Haltemittels kann vorgesehen sein, dass das Vorspannelement radial umlaufend um die Schwenkachse vorgesehen ist. Dadurch können die erzeugten Haltekräfte, Klemmkräfte oder sonstigen Hemmkräfte besonders gut auf eine verhältnismäßig große Fläche übertragen werden, sodass eine besonders sichere Hemmung oder Klemmung auch bei fertigungsbedingten Toleranzen der beteiligten Bauteile, insbesondere des Basiselements und des Wippenelements erreicht werden kann.

Besonders vorteilhaft kann das Vorspannelement als Gummiring, Tellerfeder oder als Spacer aus Kunststoff gefertigt sein, der außenseitig auf einer oder beiden Seiten auf eine Schwenkachse, beispielsweise einen Bolzen zur Realisierung der Schwenkachse, aufgesteckt wird und vorteilhaft durch ein Herstellen einer Axialkraftkomponente entlang der Schwenkachse, beispielsweise durch Anziehen einer Schraubmutter an einem Ende des Bolzens, eine Klemm- oder Hemmwirkung durch eine Anpressung an das Basiselement und/oder Wippenelement in axialer Richtung bewirkt.

Des Weiteren können vorteilhaft Schienenquerverbinder eines Montagesystems für Photovoltaikmodule zur Querverbindung von in Reihen angeordneten Bodenprofilschienen vorgesehen sein, mit einem Paar von in einer Längsrichtung der Schienenquerverbinder ineinander gesteckten Winkelschienen, dass die Winkelschienen in jeweils außenliegenden Endbereichen eine fest vorgegebene Befestigungsvorrichtung zur Verbindung mit einer Bodenprofilschiene aufweisen und ein variabler Überlapp der ineinander gesteckten Winkelschienen zur Vorgabe der Länge der Schienenquerverbinder durch ein Befestigungsmittel zur Fixierung der Relativposition der Winkelschienen zueinander im Bereich des in Längsrichtung innenliegenden Überlapps eingestellt ist.

Die Winkelschienen können beispielsweise als Biegeteile realisiert sein. Die endseitige fest vorgegebene Befestigungsvorrichtung kann in einem ersten Beispiel als Ausnehmung oder Kreisloch zur Durchführung einer Schraube zur Verbindung mit einer Bodenprofilschiene oder eines entsprechenden Bolzens realisiert sein. Es können aber auch komplexere oder kompliziertere Befestigungsvorrichtungen in den endseitigen Außenbereichen der Winkelschienen vorgesehen sein. Die Grundidee dabei darauf, dass die Befestigungsvorrichtungen in den außenliegenden Endbereichen der Winkelschienen fest vorgegeben sind und damit, anders als im Stand der Technik, die Einstellung auf unterschiedliche Abstände der Reihen von Bodenprofilschienen nicht über die endseitigen, außenseitigen Befestigungsvorrichtungen eingestellt wird, sondern dass die fest vorgegebene außenseitigen und endseitigen Befestigungsvorrichtungen entsprechend ihrer vorgegebenen Ausbildung mit den Bodenprofilschienen verbunden werden und stattdessen eine Einstellung auf unterschiedliche Abstände der Reihen von Bodenprofilschienen nicht außenliegend oder endseitig erfolgt, sondern in Längsrichtung der Schienenquerverbinder innenliegend.

Dafür sieht der Schienenquerverbinder einen im Übergang der beiden ineinandergesteckten Winkelschienen realisierten Überlapp vor, der zunächst variabel ist und eine Einstellung auf einen bestimmten Abstand von Reihen von Bodenprofilschienen zulässt, wobei der variable Überlapp nach einer entsprechenden Einstellung auf einen Abstand von Reihen von Bodenprofilschienen und damit auch auf einen entsprechenden Abstand der vorgegebenen, außenliegenden, endseitigen Befestigungsvorrichtungen durch ein Befestigungsmittel fixiert wird, sodass durch das Befestigungsmittel und dessen Fixierung der Relativposition der Winkelschienen zueinander die Länge des Überlapps oder das Maß des Überlapps eingestellt und damit letztendlich auch die Länge des Schienenquerverbinders und/oder der Abstand der vorgegebenen Befestigungsvorrichtungen vorgegeben wird.

Damit kann der Schienenquerverbinder besonders effektiv und einfach auf einen entsprechenden Abstand von benachbarten Reihen von Bodenprofilschienen eingestellt werden. Besonders vorteilhaft ist dabei, dass über den innenliegenden Überlapp und das dort angeordnete Befestigungsmittel zur Fixierung der Relativposition der Winkelschienen durch eine Fixierung des Überlapps der Winkelschienen eine besonders einfache und effektive Vormontage der Schienenquerverbninder vor einer endgültigen Montage oder Verbindung auf oder mit den Bodenprofilschienen ermöglicht wird, indem beispielsweise für ein erstes Winkelschienenpaar der zu den Reihen von Bodenprofilschienen passende Überlapp ermittelt und mit dem Befestigungsmittel fixiert wird und im Anschluss daran eine beliebig große Anzahl von Schienenquerverbindern auf dieses Maß, insbesondere auf dieses Maß des Überlapps eingestellt und mit den entsprechenden Befestigungsmitteln fixiert oder befestig werden können, sodass nach der Voreinstellung der Länge der Schienenquerverbinder über die entsprechende Fixierung des Überlapps durch die Befestigungsmittel nur noch die Montage der Schienenquerverbinder an den Bodenprofilschienen über die fest vorgegebenen Befestigungsvorrichtungen erfolgen muss. Alternativ können die Schienenquerverbinder auch zunächst mit einem variablen Überlapp endseitig mit den Bodenprofilschienen verbunden werden und anschließend wird die Relativposition der Winkelschienen und das Maß des Überlapps durch die Anordnung oder durch das Anbringen des Befestigungsmittels fixiert oder eingestellt.

Gemäß einer ersten vorteilhaften Ausführungsform der Schienenquerverbinder kann vorgesehen sein, dass die Winkelschienen quer zur Längsrichtung der Schienenquerverbinder im Wesentlichen ein L-Profil aufweisen. Dadurch kann nicht nur die notwendige mechanische Stabilität gewährleistet werden, sondern die Schienenquerverbinder können neben ihrer Stabilisierungswirkung auch eine Führungswirkung ausüben. Diese Führungswirkung, beispielsweise für Ballastelemente, kann besonders vorteilhaft dann erreicht werden, wenn zwei Reihen von Schienenquerverbindern mit entsprechenden L-Profilen so angeordneten werden, dass jeweils von den Bodenprofilschienen, im Wesentlichen rechtwinklig, abstehende Bereiche des L-Profils so parallel zueinander ausgerichtet sind, dass eine Führung von Ballastelementen zwischen den abstehenden Bereichen der L-Profile ermöglicht wird. Bevorzugt liegen die Ballastelemente dabei auf parallel zu den Bodenprofilschienen verlaufenden Bereichen der Winkelschienen auf.

Gemäß einer weiteren, besonders vorteilhaften Ausgestaltung der Schienenquerverbinder kann vorgesehen sein, dass Führungsmittel zur Führung der ineinander gesteckten Winkelschienen durch Umformungen von Endbereichen von zumindest einer Winkelschiene ausgebildet sind. Besonders bevorzugt kann in einem Endbereich oder in beiden Endbereichen der Winkelschiene in Profilrichtung oder quer zur Längsrichtung eine Umformung zu einer Lasche vorgesehen sein, wobei die Lasche dann dazu dienen kann, zumindest im Bereich des Überlapps eine zweite Winkelschiene innenliegend in der Lasche zu führen und damit eine Führungswirkung der endseitigen Umformung bereitzustellen.

Vorteilhaft können die Umformungen so ausgestaltet sein, dass ein abwechselndes Ineinanderstecken von Winkelschienen, auch über einen einzelnen Schienenquerverbinder hinweg, ermöglicht und dabei bevorzugt auch eine Führung erreicht wird. So können an einer innenliegenden Reihe von Bodenprofilschienen zwei in jeweils außenliegenden Endbereichen der Winkelschienen angeordnete fest vorgegebene Befestigungsvorrichtung zweier benachbarter Schienenquerverbinder so ineinandergesteckt und bevorzugt miteinander geführt angeordnet werden, dass eine gemeinsame Befestigung mit oder an deiner Bodenprofilschiene über in Deckung zueinander gebrachte fest vorgegebene Befestigungsvorrichtungen erreicht wird.

Weiterhin kann in einer vorteilhaften Ausführungsform vorgesehen sein, dass die Winkelschienen in einem innenliegenden Endbereich jeweils ein Langloch oder eine Schlitzung aufweisen, die im ineinander gesteckten Zustand der Winkelschienen, insbesondere zur Ausbildung eines Überlapps, zumindest teilweise in Deckung zueinander angeordnet sind. Dies ermöglicht, dass zusätzlich zu den endseitigen Befestigungen mit oder an Reihen von Bodenprofilschienen auch eine Verbindung oder Befestigung mit einer Reihe von Bodenprofilschienen mittig erreicht werden kann. Dies kann vorteilhaft sein, um gerade bei einer durch die Ausrichtung der Grundseiten der Photovoltaikmodule verursachten engen Aneinanderreihung von Reihen von Bodenprofilschienen trotzdem eine Verbindung über die erfindungsgemäßen Schienenquerverbinder ermöglichen zu können und darüber hinaus verhältnismäßig wenige Schienenquerverbinder zu verbauen, da dadurch jeweils insgesamt drei Reihen von Bodenprofilschienen über einen Schienenquerverbinder miteinander verbunden werden können.

Gemäß einer weiteren bevorzugten Ausführungsform des Schienenquerverbinders kann zudem vorgesehen sein, dass das Befestigungsmittel als Schraube, Stift, Bolzen oder Niet ausgestaltet ist, welches bevorzugt durch Endbereiche und/oder Führungsmittel der Winkelschienen im Überlapp verläuft. Bei der Ausbildung als Schraube, beispielsweise als selbstschneidende Schraube kann die Vormontage der Winkelschienen zur Vorgabe und Fixierung des Überlapps und damit zur Vorgabe und Einstellung der Länge der Schienenquerverbinder passend zum Abstand der Reihen von Bodenprofilschienen besonders einfach und komfortabel erfolgen.

Die oben genannte Aufgabe wird ferner auch durch ein Montagesystem für Photovoltaikmodule gelöst, welches Schienenquerverbinder der vorangehend beschriebenen Art und/oder Haltemittel nach einem der gemäß der obigen Beschreibung und/oder ein Bodenprofilschienensystem der dargelegten Bauart und/oder Verbindungselemente nach den eingangsbeschriebenen Ausführungsformen aufweist.

Wie oben bereits ausgeführt, kann durch die Realisierung der entsprechenden Schienenquerverbinder, Haltemittel, Bodenprofilschienensysteme und/oder Verbindungselemente eine besonders einfache und sichere Installation des Montagesystems erreicht werden, wobei die einfache Installation eben nicht nur die Installation vor Ort oder am Aufstellort betrifft, sondern auch die Verbringung oder den Transport der zu montierenden Einzelteile an den Aufstellort oder Montageort miteinschließt.

Die Erfindung wird nachfolgend anhand von lediglich schematischen, vorteilhafter Ausführungen der Erfindung darstellenden Zeichnungen weiter erläutert. Darin zeigt:
- Fig. 1:: eine schematische, perspektivische Darstellung eines erfindungsgemäßen Montagesystems samt Photovoltaikmodulen;
- Fig. 2:: eine schematische Darstellung eines ersten vergrößerten Ausschnitts der Darstellung der Fig. 1;
- Fig. 3:: eine schematische Darstellung eines zweiten vergrößerten Ausschnitts der Darstellung der Fig. 1;
- Fig. 4:: eine schematische Perspektiv-Darstellung eines erfindungsgemäßes Verbindungselement;
- Fig. 5a:: eine schematische Draufsicht auf einen Ausschnitt eines erfindungsgemäßen Bodenprofilschienensystems am Übergang zwischen zwei Bodenprofilschienen
- Fig. 5b:: eine schematische Perspektivansicht auf einen Ausschnitt eines erfindungsgemäßen Bodenprofilschienensystems am Übergang zwischen zwei Bodenprofilschienen;
- Fig. 6:: eine schematische Darstellung eines dritten vergrößerten Ausschnitts der Darstellung der Fig. 1 in einer Draufsicht;
- Fig. 7:: eine schematische Darstellung eines Schnitt durch zwei nicht von der Erfindung umfasste Schienenquerverbinder auf der Höhe der Befestigungsmittel;
- Fig. 8:: eine schematische Perspektiv-Darstellung eines nicht von der Erfindung umfassten Haltemittels.

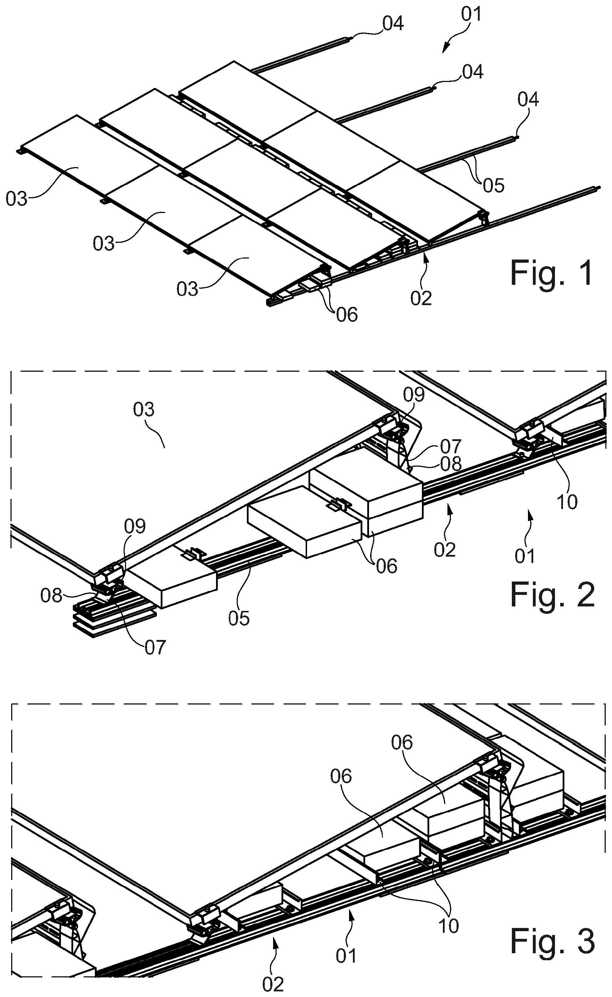

Fig. 1 zeigt eine perspektivische Darstellung eines Photovoltaiksystems, welches ein Montagesystem 02 und auf dem Montagesystem angeordnete oder mit dem Montagesystem verbundene Photovoltaikmodule 03 umfasst. Bereits zu erkennen sind mehrere Reihen 04 von Bodenprofilschienen 05. Weiterhin sind bereits erkennbar Ballastelemente 06.

In der Fig. 2 ist ein vergrößerter Ausschnitt aus dem Photovoltaiksystem 01 dargestellt. Neben den Ballastelementen 06 sind auch deutlicher als in der Fig. 1 die Halteelemente 07 dargestellt, mit denen eine Verbindung oder Befestigung zwischen Bodenprofilschienen 05 und Photovoltaikmodulen 03 hergestellt wird. Die Halteelemente 07 sind in zwei unterschiedlichen Ausführungen dargestellt, wobei die Unterschiede sich im Wesentlichen auf ein Basiselement 08 beziehen. **In** einer ersten Ausführungsform, die in der Fig. 2 links dargestellt ist, fällt das Basiselement 08 kurz aus. In einem weiter rechts dargestellten Ausführungsbeispiel des Haltemittels 07 ist das Basiselement 08 länger oder höher ausgebildet und hat eine Ständerform oder Ständerwirkung.

Auf den jeweiligen Basiselementen 08 schwenkbar um eine Drehachse gelagert angeordnet ist ein Wippenelement 09 ausgebildet oder angeordnet. Weiterhin ist im rechten Bereich der Fig. 2 ein Schienenquerverbinder 10 dargestellt oder erkennbar, der eine Querverbindung von in den Reihen 04 angeordneten Bodenprofilschienen 05 ermöglicht oder sicherstellt.

In der Fig. 3 ist ein alternativer Ausschnitt eines Photovoltaiksystems 01 mit einem entsprechenden Montagesystem 02 dargestellt, wobei bereits erkennbar ist, dass Paare von Schienenquerverbindern 10 jeweils genutzt werden können, um als Führung, Halterung und/oder Aufnahme von Ballastelementen 06 zu dienen, wobei sich die Form der Schienenquerverbinder als grundsätzliche Winkelschienen mit einem L-Profil zunutze gemacht wird.

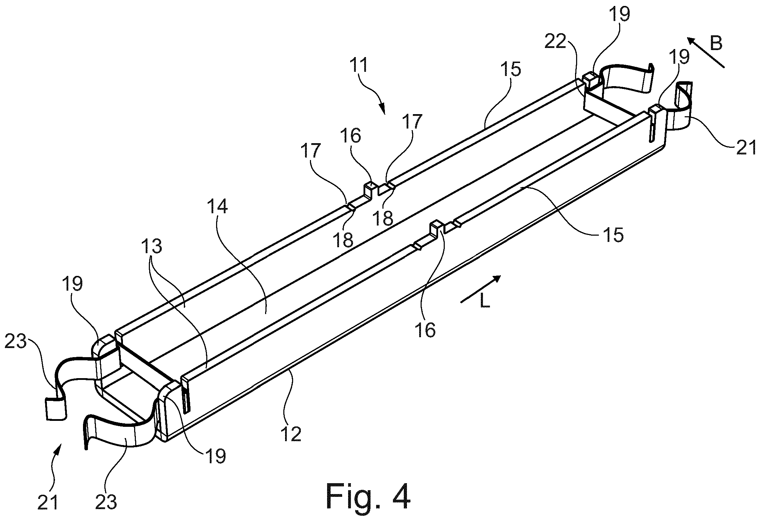

Die Fig. 4 zeigt einen erfindungsgemäßes Verbindungselement 11 für Bodenprofilschienen eines Montagesystems für Photovoltaikmodule. Das Verbindungselement 11 umfasst einen Grundkörper 12 der als U-Profilschiene ausgebildet ist und zwei parallele Seitenschenkel 13 und ein zwischen den Seitenschenkels 13 angeordneten Verbindungsabschnitt 14 aufweist. An einem von dem Verbindungsabschnitt 14 abgewandten, freien Ende 15 weisen die Seitenschenkel 13 in Längsrichtung L des Verbindungselements 11 oder des Grundkörpers 12 einen Überstand 16 auf. Der Überstand 16 ist bevorzugt einstückig, insbesondere monolithisch, mit dem Grundkörper 12 ausgebildet. Bevorzugt kann der Überstand 16 sowie der Grundkörper 12 aus einem metallischen Material, besonders bevorzugt als Biegeteil, hergestellt sein.

In Längsrichtung auf beiden Seiten des Überstands 16 sind Markierungen 17, insbesondere in Form einer Kerbe 18, ausgebildet.

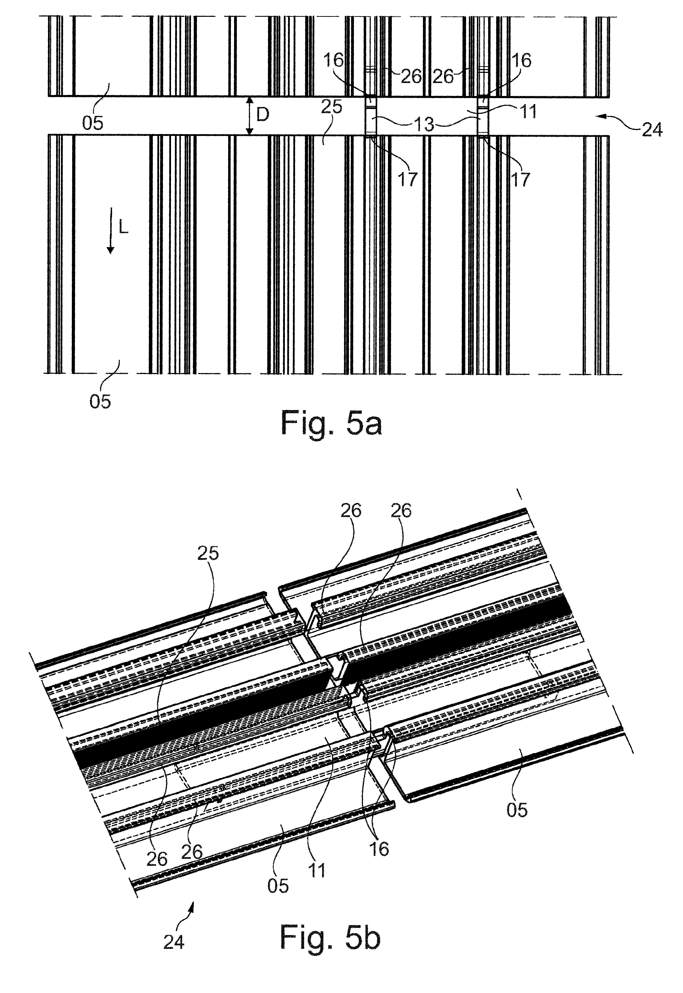

Wie mit Bezug zu den Fig. 5a und 5b noch deutlicher herausgearbeitet werden wird, ist der Überstand 16 so ausgebildet, dass dieser im montierten Zustand nicht oben über die Wandung eines Kanalabschnitts einer Bodenprofilschiene übersteht, in die das Verbindungselement, insbesondere der Seitenschenkel 13 des Verbindungselements 11 im Rahmen der Montage eingeführt wird. Dies erlaubt, dass auch im Übergangsbereich zweier Bodenprofilschienen Haltemittel zur Montage oder Befestigung von Photovoltaikmodulen angeordnet werden können, ohne dass der Überstand 16 oder das Verbindungselement 11 dies beeinträchtigen oder verhindern würde. Gleichzeitig wird durch den Überstand 16, insbesondere in Verbindung mit den Markierungen 17 oder den Kerben 18 besonders einfach und vorteilhaft ermöglicht eine Dehnungsfuge zwischen benachbarten Bodenprofilschienen auszubilden, die die thermische Expansion der Bodenprofilschienen kompensieren und somit ein Loslager zwischen benachbarten Bodenprofilschienen ausbilden.

Die Seitenschenkel 13 weisen im Bereich der freien Enden 15 in den Endabschnitten in Längsrichtung eine Abrundung 19 auf. Diese Abrundungen 19 kann das Einsetzen oder Einführen des Verbindungselements 11 in eine Bodenprofilschiene, insbesondere in Kanalabschnitte einer Bodenprofilschiene verbessern und erleichtern.

Ferner sind in den Endbereichen oder Endabschnitten der Seitenschenkel 13 in Längsrichtung Aufnahmevertiefungen 20 ausgebildet, in die ein Spangenelement 21 eingesetzt ist. Die Aufnahmevertiefungen 19 sind dabei als Schlitzung 22 ausgebildet, die sich vom freien Ende 15 aus in Richtung des Verbindungsabschnitts 14 ausbilden.

Die Spangenelemente 21 weisen elastisch verformbare Seitenteile 23 auf, die in einer Breitenrichtung B teilweise über die Seitenschenkel 13 überstehen und dadurch im montierten Zustand durch eine Verformung der Seitenteile 23 eine Anpressung an die Bodenprofilschiene, bevorzugt die Kanalabschnitte der Bodenprofilschiene, ermöglichen.

Die Fig. 5a zeigt einen Ausschnitt eines erfindungsgemäßen Bodenprofilschienensystems 24 am Übergang zwischen zwei Bodenprofilschienen 05. Es ist erkennbar, dass das Verbindungselement 11 auf einer Seite eines Mittelkanals 25 in entsprechende Kanalabschnitte 26 der Bodenprofilschiene 05 eingesetzt oder eingeführt wurde. Ein weiteres Verbindungselement 11 auf der anderen Seite des Mittelkanals 25 kann vorgesehen sein, ist in der Darstellung der Fig. 5a aber aus Gründen der Übersichtlichkeit nicht dargestellt.

Es ist erkennbar, dass die Überstände 16 der Seitenschenkel 13 auf einer Seite bündig mit einer oberen Bodenprofilschiene 05 abschließen oder auf Stoß mit der oberen Bodenprofilschiene 05 angeordnet sind. Auf der gegenüberliegenden Seite der Überstände 16 in Längsrichtung L ist die benachbarte Bodenprofilschiene 05 mit einem Abstand zum Ende des Überstands 16 angeordnet, wobei der Abstand dem Abstand zwischen dem Ende des Überstands und der Markierung 17 entspricht. Dadurch wird zwischen den Bodenprofilschienen 05 ein Abstand A realisiert, der mit Ausnahme der Erstreckung des Überstands 16 zur Kompensation von thermischer Ausdehnung der Bodenprofilschiene 05 als Dehnungsfuge genutzt werden kann.

Die Fig. 5b zeigt einen, der Fig. 5a entsprechenden Ausschnitt eines Bodenprofilschienensystems 24 in einer perspektivischen Darstellung, in der neben dem Mittelkanal 25 auch die seitlichen Kanalabschnitte 26 in die das Verbindungselement 11 eingesetzt ist, deutlicher hervorgehen. Es ist in der perspektivischen Ansicht der Fig. 5b weiterhin erkennbar, dass die Überstände 16 gerade nicht über die Kanalabschnitte 26 der Bodenprofilschienen 05 oben oder ansonsten überstehen, sodass auch im Übergangsbereich zwischen den Bodenprofilschienen 05 grundsätzlich Haltemittel zur Befestigung von Photovoltaikmodulen angeordnet werden können.

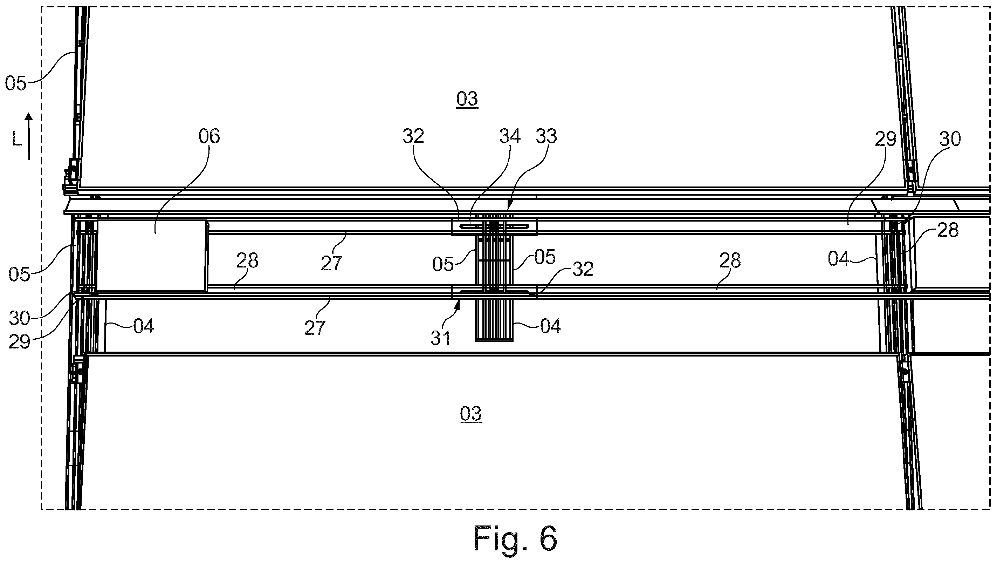

Fig. 6 zeigt einen weiteren Ausschnitt eines erfindungsgemäßen Montagesystems. Neben den montierten Photovoltaikmodulen 03 sind mehrere Reihen 04 mit jeweils mehreren, aneinander angrenzenden und bevorzugt über erfindungsgemäße Verbindungselemente miteinander verbundene Bodenprofilschienen 05 dargestellt. Quer zur Längsrichtung L der Bodenprofilschienen 05 verlaufen zwischen den Bodenprofilschienen 05 Schienenquerverbinder 27. Die Schienenquerverbinder 27 umfassen jeweils ein Paar von ineinander gesteckten Winkelschienen 28, wobei die Winkelschienen in jeweils außenliegenden Endbereichen fest vorgegebene Befestigungsvorrichtungen 30 aufweisen. Im Beispiel der Fig. 6 sind die Befestigungsvorrichtungen bevorzugt als einfache Lochbohrungen durch die Winkelschienen, bevorzugt in Verbindung mit einem Schraubbolzen und/oder einer Unterlegscheibe ausgebildet.

Die Befestigungsvorrichtungen 30 werden bevorzugt in den Mittelkanal 25 der Bodenprofilschiene 05 eingeschraubt und dort befestigt. Um die Befestigungsvorrichtungen 30 auf beiden Seiten des Schienenquerverbinders 27 auf den Abstand der Reihen 04 von Bodenprofilschienen 05 einzustellen, wird im ineinandergesteckten Bereich der Winkelschienen 28 ein Überlapp 31 ausgebildet, wobei im innenliegenden Überlapp 31 Befestigungsmittel 32 zur Fixierung der Relativpositionen der Winkelschienen 28 zueinander angeordnet oder angebracht sind.

Die Befestigungsmittel 32 können beispielsweise als selbstschneidende Schraube ausgebildet sein, die durch beide im Überlapp angeordnete Winkelschienen 28 geschraubt wird, um so die Fixierung der Relativposition der Winkelschienen 28 zueinander einzustellen.

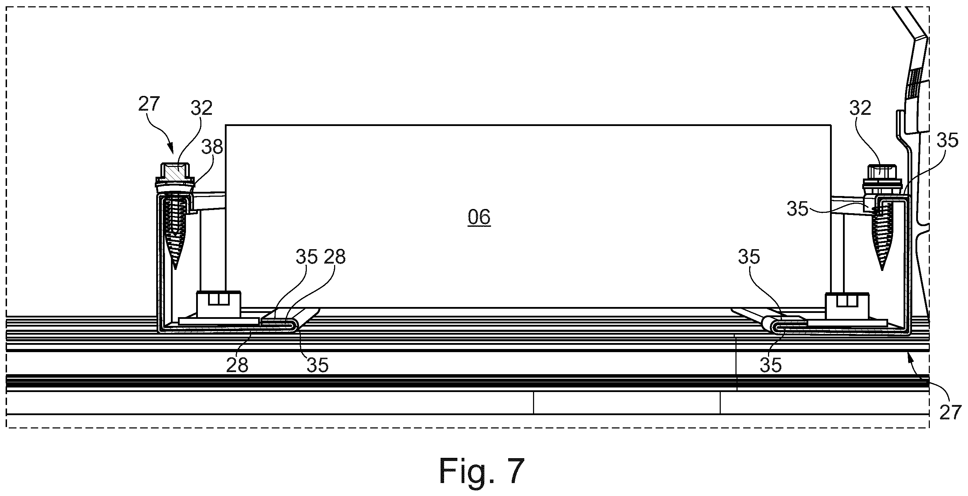

Wir bereits der Fig. 3 entnommen werden kann und auch nachfolgend mit Bezug auf die Fig. 7 noch deutlicher erkennbar werden wird, sind die Winkelschienen 28, insbesondere mit Ausnahme von entsprechenden Endbereichen des Profils im Wesentlichen als L-Profile ausgebildet.

Weiterhin ist in der Fig. 6 gezeigt, dass die Winkelschienen in einem innenliegenden Endbereich 33 jeweils ein Langloch 34 aufweisen, wobei die beiden Langlöcher 34 der beiden Winkelschienen 28 so ausgebildet und angeordnet sind, dass im ineinandergesteckten Zustand der Winkelschienen 28 zumindest eine teilweise Deckung der Langlöcher 34 erreicht wird, was in der Darstellung der Fig. 6 dazu führt, dass über weitere Befestigungsvorrichtungen eine Befestigung mit oder an einer weiteren Bodenprofilschiene 05 oder einer Reihe 04 von Bodenprofilschienen 05 ermöglicht wird. In der Darstellung der Fig. 6 ist ersichtlich, dass die mittlere Reihe 04 von Bodenprofilschienen 05 grundsätzlich keine wirklich technische Relevanz oder Bedeutung hat, sondern dass diese lediglich zur Veranschaulichung des Zwecks der Langlöcher 34 und des innenliegenden Endbereichs der Winkelschienen 28 dient. Die mittlere Reihe 04 von Bodenprofilschienen 05 kann aber durchaus technisch relevant sein, wenn die Photovoltaikmodule 03, nicht wie in der Fig. 6 dargestellt, mit ihrer kurzen Seite parallel zu der Längsrichtung L der Bodenprofilschienen ausgerichtet sind, sondern um 90 Grad gedreht mit einer langen Seite der Photovoltaikmodule 03 parallel zur Längsrichtung der Reihen 04 von Bodenprofilschienen ausgerichtet werden. In diesem Fall kann die zusätzliche, innenliegende Reihe 04 von Bodenprofilschienen 05 genutzt werden, um einen entsprechend verringerten Abstand der Haltemittel zu ermöglichen.

Die Fig. 6 zeigt auch bereits, dass die Winkelschienen 28, auch durch hier vorteilhaft im Wesentlichen L-förmiges Profil besonders gut geeignet sind, um paarweise als Führung und Aufnahme von Ballastelementen 06 zu wirken, wenn die Winkelschienen 28 so angeordnet werden, wie beispielsweise in der Fig. 6 dargestellt.

Die Fig. 7 zeigt einen Schnitt durch zwei Schienenquerverbinder 27 auf der Höhe der Befestigungsmittel 32. Im Schnitt der Schienenquerverbinder 27 ist zu erkennen, dass zwei Winkelschienen 28 ineinandergesteckt sind, wobei die Winkelschienen 28 grundsätzlich ein L-förmiges Profil aufweisen. Zudem ist in den außenliegenden oder endseitigen Abschnitten des Profils über eine Umformung von Endbereichen eine Führung und dazugehörige Führungsmittel 35 ausgebildet, wobei die Führungsmittel 35 das Ineinanderstecken und gegeneinander Verschieben der Winkelschienen 28 der Schienenquerverbinder 27 erleichtern. Es ist erkennbar, dass die Befestigungsmittel 32 durch die Führungsmittel 35 verlaufen, um eine bessere Fixierung der Winkelschienen 28 zueinander zu ermöglichen.

Die Führungsmittel erlauben auch ein Ineinanderstecken von Winkelschienen 28 und deren gegenseitige Führung im Übergangsbereich zweier Schienenquerverbinder, wie beispielsweise im rechten Bereich der Fig. 6 dargestellt. Dadurch können bei einer entsprechenden Anordnung der Winkelschienen 28 in abwechselnder Reihenfolge beliebig viele Schienenquerverbinder hintereinander angeordnet werden.

In der Fig. 7 ist ebenfalls erkennbar, wie die Winkelschienen 28 der Schienenquerverbinder 27 als Aufnahme oder Führung für etwaige Ballastelemente 06 dienen, indem die Ballastelemente 06 teilweise auf den Winkelschienen 28 aufliegen und teilweise seitlich von den Winkelschienen 28 geführt werden.

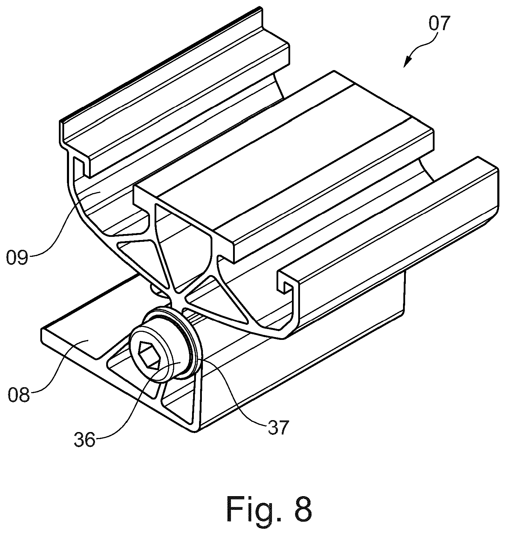

Die Fig. 8 zeigt eine perspektivische Ansicht eines Haltemittels 07, welches ein Basiselement 08 und ein Wippenelement 09 umfasst. Das Basiselement 08 dient zur Verbindung eines Photovoltaikmoduls mit einer Bodenprofilschiene. Gegenüber dem Basiselement 08 ist das Wippenelement 09 um eine Schwenkachse 36 schwenkbar gelagert. Die Schwenkachse 36 kann, wie in der Fig. 8 dargestellt, als Bolzen, beispielsweise als Schraubbolzen, mit einem endseitigen Kopf, beispielsweise einem Kopf mit einem Innensechskant, ausgebildet sein.

Das Haltemittel 07 umfasst dabei ein Vorspannelement 37, welches derart mit dem Basiselement 08 und/oder dem Wippenelement 09 zusammenwirkt, dass bei einer Beschleunigung des Wippenelements 09 lediglich durch die Gewichtskraft eine Rotation des Wippenelements 09 gegenüber dem Basiselement 08 verhindert wird und bei einer zusätzlichen Beschleunigung, insbesondere durch eine händische oder werkzeuglose Krafteinwirkung, eine, bevorzugt stufenlose, Verstellung des Wippenelements 09 gegenüber dem Basiselement 08 ermöglicht wird. Im Beispiel der Fig. 8 ist das Vorspannelement als O-Ring beispielsweise aus Kunststoff oder Hartgummi ausgeführt und verursacht eine Klemmwirkung auf das Wippenelement. Der O-Ring des Vorspannelements 37 ist dabei konzentrisch zur Schwenkachse 36 und bevorzugt in beiden Endbereichen des Vorspannelements 37 angeordnet. Das Vorspannelement 37 verläuft radial umlaufend um die Schwenkachse 36. Die Fig. 8 zeigt ein kurzes Haltemittel mit einem entsprechend kurzen Basiselement 08, wie einleitend mit Bezug zur Fig. 2 bereits ausgeführt, kann das Haltemittel 07 auch mit einem entsprechend langen, ständerförmigen Basiselement 08 ausgeführt sein, ohne dass dies eine Auswirkung auf die Realisierung oder Wirkung des Vorspannelements 37 ausübt.

### Bezugszeichenliste

- 01: Photovoltaiksystem
- 02: Montagesystem
- 03: Photovoltaikmodule
- 04: Reihen
- 05: Bodenprofilschienen
- 06: Ballastelemente
- 07: Haltemittel
- 08: Basiselement
- 09: Wippenelement
- 10: Schienenquerverbinder
- 11: Verbindungselement
- 12: Grundkörper
- 13: Seitenschenkel
- 14: Verbindungsabschnitt
- 15: freies Ende
- 16: Überstand
- 17: Markierungen
- 18: Kerbe
- 19: Rundungen
- 20: Aufnahmevertiefungen
- 21: Spangenelement
- 22: Schlitzung
- 23: Seitenteile
- 24: Bodenprofilschienensystem
- 25: Mittelkanal
- 26: Kanalabschnitte
- 27: Schienenquerverbinder
- 28: Winkelschienen
- 29: Endbereiche
- 30: Befestigungsvorrichtungen
- 31: Überlapp
- 32: Befestigungsmittel
- 33: Endbereich
- 34: Langloch
- 35: Führungsmittel
- 36: Schwenkachse
- 37: Vorspannelement

- L: Längsrichtung
- B: Breitenrichtung

## Patentansprüche

1. Verbindungselement für Bodenprofilschienen eines Montagesystems für Photovoltaikmodule,
**gekennzeichnet durch**
einen als U-Profilschiene ausgebildeten Grundkörper **(12)** mit zwei parallelen Seitenschenkeln **(13)** und einem Verbindungsabschnitt **(14),** wobei beide Seitenschenkel **(13)** an einem vom Verbindungsabschnitt **(14)** abgewandten freien Ende **(15)** einen, bevorzugt monolithisch mit dem Grundkörper **(12)** ausgebildeten, Überstand **(16)** aufweisen, wobei im montierten Zustand die Seitenschenkel **(13)** in Kanalabschnitten **(26)** der Bodenprofilschiene **(05)** so geführt werden, dass eine Wandung der Kanalabschnitte **(26)** oberhalb und bevorzugt angrenzend an die freien Enden **(15)** der Seitenschenkel **(13)** verlaufen, wobei der Überstand **(16)** so ausgebildet ist, dass dieser im montierten Zustand nicht oben über die Wandung des Kanalabschnitts **(26)** übersteht.

2. Verbindungselement nach Anspruch 1,
**dadurch gekennzeichnet,**
**dass** das freie Ende **(15)** der Seitenschenkel **(13)** in einer Längsrichtung auf einer Seite, bevorzugt auf beiden Seiten, in einem vorgegebenen Abstand von dem Überstand **(16),** eine Markierung, insbesondere eine Kerbe **(18),** aufweist.

3. Verbindungselement nach Anspruch 1 oder 2,
**dadurch gekennzeichnet,**
**dass** der Grundkörper **(12)** in Endabschnitten der Seitenschenkel **(13)** in Längsrichtung eine Aufnahmeöffnung oder Aufnahmevertiefung **(20)** aufweist, die zur Aufnahme eines Spangenelements **(21)** dient.

4. Verbindungselement nach Anspruch 3,
**dadurch gekennzeichnet,**
**dass** die Aufnahmeöffnung oder Aufnahmevertiefung **(20)** sich vom freien Ende **(15)** der Seitenschenkel **(13)** in Richtung des Verbindungsabschnitts **(14),** bevorzugt als Schlitzung **(22),** erstreckt.

5. Verbindungselement nach einem der Ansprüche 3 oder 4,
**gekennzeichnet durch**
ein in die Aufnahmeöffnung oder Aufnahmevertiefung (20) eingesetztes Spangenelement **(21),** welches in einer Breitenrichtung mit elastisch verformbaren Seitenteilen **(23)** wenigstens teilweise über die Seitenschenkel **(13)** übersteht im montierten Zustand **durch** eine Verformung der Seitenteile **(23) durch** die Bodenprofilschiene **(05)** eine Anpressung der Seitenteile **(23)** an die Bodenprofilschiene **(05),** bevorzugt die Kanalabschnitte **(26),** bereitstellt.

6. Bodenprofilschienensystem eines Montagesystems für Photovoltaikmodule,
umfassend wenigstens zwei Reihen von Bodenprofilschienen, die zur Befestigung von Haltemitteln zur Halterung von Photovoltaikmodulen dienen, wobei jeder Reihe von Bodenprofilschienen wenigstens zwei Bodenprofilschienen umfasst,
**dadurch gekennzeichnet,**
**dass** zwischen jeweils zwei aneinander angrenzenden Bodenprofilschienen **(05)** ein Verbindungselement **(11)** nach einem der Ansprüche 1 bis 5 angeordnet ist.

7. Bodenprofilschienensystem nach Anspruch 6,
**dadurch gekennzeichnet,**
**dass** im Zustand einer Erstmontage das Verbindungselement **(11)** so angeordnet ist, dass der Überstand **(16)** auf einer Seite bündig an einer Bodenprofilschiene **(05)** angrenzt und auf der anderen Seite des Überstands **(16)** eine Bodenprofilschiene **(05)** am oder im Bereich der Markierung **(17)** endet.

8. Bodenprofilschienensystem nach Anspruch 6 oder 7,
**gekennzeichnet durch**
eine entnehmbare Abstandslehre, die bei der Erstmontage auf einer Seite des Überstands **(16)** auf oder an dem Verbindungselement **(11)** positioniert ist und einen Hilfsanschlag für eine Bodenprofilschiene **(05)** darstellt, um einen vorgegebenen Abstand zwischen Überstand **(16)** des Verbindungselements **(11)** und einer benachbarten Bodenprofilschiene **(05)** in einer Längsrichtung sicherzustellen.

9. Montagesystem für Photovoltaikmodule
**gekennzeichnet durch**,
Bodenprofilschienensystem **(24)** nach einem der Ansprüche 6 bis 8 und/oder
Verbindungselement **(11)** nach einem der Ansprüche 1 bis 5.

## Claims

1. A connection element for bottom profile rails of a mounting system for photovoltaic modules,
**characterized by**
a base body **(12)** realized as a U-profile rail and having two parallel side legs **(13)** and a connection section **(14),** wherein both side legs **(13)** have a projection **(16)** on a free end **(15)** facing away from the connection section **(14),** said projection **(16)** being realized preferably monolithically with the base body **(12),** wherein, in the mounted state, the side legs **(13)** are guided in channel sections **(26)** of the bottom profile rail **(05)** in such a manner that a wall of the channel sections **(26)** runs above and preferably adjacent to the free ends **(15)** of the side legs **(13),** wherein the projection **(16)** is realized in such a manner that it does not project at the top beyond the wall of the channel section **(26)** in the mounted state.

2. The connection element according to claim 1,
**characterized in that**
the free end **(15)** of the side legs **(13)** has a mark, in particular a notch **(18),** on one side, preferably on both sides, in a longitudinal direction at a predetermined distance from the projection **(16).**

3. The connection element according to claim 1 or 2,
**characterized in that**
the base body **(12)** has a receiving opening or receiving indentation **(20)** in end sections of the side legs **(13)** in the longitudinal direction, said receiving opening or receiving indentation **(20)** serving to receive a clasp element **(21).**

4. The connection element according to claim 3,
**characterized in that**
the receiving opening or receiving indentation **(20)** extends from the free end **(15)** of the side legs **(13)** in the direction of the connection section **(14),** preferably as a slit **(22).**

5. The connection element according to claim 3 or 4,
**characterized in that**
a clasp element **(21)** inserted into the receiving opening or receiving indentation **(20)** and projecting in a width direction at least partially beyond the side legs **(13)** with elastically deformable side parts **(23),** in the mounted state, provides a pressing of the side parts **(23)** on the bottom profile rail **(05),** preferably the channel sections **(26),** due to a deformation of the side parts **(23)** by means of the bottom profile rail **(05).**

6. A bottom profile rail system of a mounting system for photovoltaic modules,
said bottom profile rail system comprising at least two rows of bottom profile rails serving for the fixation of holding elements for holding photovoltaic modules, wherein each row of bottom profile rails comprises at least two bottom profile rails,
**characterized in that**
a connection element **(11)** according to any one of claims 1 to 5 is disposed between each two adjacent bottom profile rails **(05).**

7. The bottom profile rail system according to claim 6,
**characterized in that**
in the state of an initial mounting, the connection element **(11)** is disposed in such a manner that the projection **(16)** adjoins in a flush manner with a bottom profile rail **(05)** on one side and that, on the other side of the projection **(16),** a bottom profile rail **(05)** ends at or in the area of the mark **(17).**

8. The bottom profile rail system according to claim 6 or 7,
**characterized by**
a removable distance gauge which is positioned on one side of the projection **(16)** on or at the connection element **(11)** during the initial mounting and is an auxiliary stop for a bottom profile rail **(05)** in order to ensure a predetermined distance between the projection **(16)** of the connection element **(11)** and an adjacent bottom profile rail **(05)** in a longitudinal direction.

9. A mounting system for photovoltaic modules
**characterized by**
a bottom profile rail system **(24)** according to any one of claims 6 to 8 and/or
a connection element **(11)** according to any one of claims 1 to 5.

## Revendications

1. Élément de liaison pour des rails profilés de fond d'un système de montage pour des modules photovoltaïques,
**caractérisé par**
un corps de base **(12)** réalisé comme rail profilé en U et ayant deux jambes latérales **(13)** parallèles et une section de liaison **(14),** dans lequel les deux jambes latérales **(13)** ont une saillie **(16)** d'une extrémité libre **(15)** détournée de la section de liaison **(14),** ladite saillie **(16)** étant, de préférence, réalisée de manière monolithique avec le corps de base **(12),** dans lequel, dans l'état monté, les jambes latérales **(13)** sont guidées dans des sections de canal **(26)** des rails profilés **(05)** de fond de manière qu'une paroi des sections de canal **(26)** s'étend au-dessus des et, de préférence, de manière adjacente aux extrémités libres **(15)** des jambes latérales **(13),** dans lequel la saillie **(16)** est réalisée de manière qu'elle ne fait pas saillie en haut au-delà de la paroi de la section de canal **(26)** dans l'état monté.

2. Élément de liaison selon la revendication 1,
**caractérisé en ce que**
l'extrémité libre **(15)** des jambes latérales **(13)** a une marque, notamment une encoche **(18),** d'un côté, de préférence des deux côtés, dans une direction longitudinale à une distance prédéterminée de la saillie **(16).**

3. Élément de liaison selon la revendication 1 ou 2,
**caractérisé en ce que**
le corps de base **(12)** a une ouverture de réception ou une cavité de réception **(20)** dans des sections d'extrémité des jambes latérales **(13)** dans la direction longitudinale, ladite ouverture de réception ou ladite cavité de réception **(20)** servant à recevoir un élément d'agrafe **(21).**

4. Élément de liaison selon la revendication 3,
**caractérisé en ce que**
l'ouverture de réception ou la cavité de réception **(20)** s'étend à partir de l'extrémité libre **(15)** des jambes latérales **(13)** dans la direction de la section de liaison **(14),** de préférence comme fente **(22).**

5. Élément de liaison selon la revendication 3 ou 4,
**caractérisé en ce**
**qu'**un élément d'agrafe **(21)** inséré dans l'ouverture de réception ou la cavité de réception **(20)** et faisant saillie avec des parties latérales **(23)** élastiquement déformables dans une direction de largeur au moins partiellement au-delà des jambes latérales **(13)** fournit dans l'état monté une pression des parties latérales **(23)** contre le rail profilé **(05)** de fond, de préférence les sections de canal **(26),** en raison d'une déformation des parties latérales **(23)** au moyen du rail profilé **(05)** de fond.

6. Système de rails profilés de fond d'un système de montage pour des modules photovoltaïques,
ledit système de rails profilés de fond comprenant au moins deux rangées de rails profilés de fond servant à fixer des moyens de retenue pour retenir des modules photovoltaïques, dans lequel chaque rangée de rails profilés de fond comprend au moins deux rails profilés de fond, **caractérisé en ce**
**qu'**un élément de liaison **(11)** selon l'une quelconque des revendications 1 à 5 est disposé entre toujours deux rails profilés **(05)** de fond adjacents.

7. Système de rails profilés de fond selon la revendication 6,
**caractérisé en ce que**
l'élément de liaison **(11)** est disposé dans l'état d'un montage initial de manière que la saillie **(16)** avoisine un rail profilé **(05)** de fond de manière affleurée d'un côté et qu'un rail profilé **(05)** de fond se termine sur ou dans la zone de la marque **(17)** de l'autre côté de la saillie **(16).**

8. Système de rails profilés de fond selon la revendication 6 ou 7, **caractérisé par**
une jauge de distance amovible qui est positionnée pendant le montage initial d'un côté de la saillie **(16)** sur ou à l'élément de liaison **(11)** et est un arrêt auxiliaire pour un rail profilé **(05)** de fond afin d'assurer une distance prédéterminée entre la saillie **(16)** de l'élément de liaison **(11)** et un rail profilé **(05)** de fond adjacent dans une direction longitudinale.

9. Système de montage pour des modules photovoltaïques, **caractérisé par**
un système **(24)** de rails profilés de fond selon l'une quelconque des revendications 6 à 8
et/ou
un élément de liaison **(11)** selon l'une quelconque des revendications 1 à 5.
